# EUROPEAN PATENT APPLICATION

(11) **EP 2 796 409 A1**
(43) Date of publication of application: **29.10.2014**
(21) Application number: 12858883.7
(22) Date of filing: 10.12.2012
(51) Int. Cl.: C01B 33/02, C01B 33/025

(54) **METHOD AND APPARATUS FOR PRODUCING SILICON MICROPARTICLES**

(30) Priority: 21.12.2011 JP 2011279733
(71) Applicant: Bridgestone Corporation, Tokyo 104-8340 (JP)
(72) Inventor: ENDO, Shinobu, (JP); IWABUCHI, Yoshinori, (JP); YAMAMOTO, Yukiko, (JP)
(74) Representative: Oxley, Robin John George
(86) International application number: PCT/JP2012/081935
(87) International publication number: WO 2013/094458

(57) **Abstract**

A method for producing silicon fine particles of the present invention comprises: a step A of heating a precursor obtained by drying a mixture containing a silicon source and a carbon source by using a heating means in an inert atmosphere in a part formed by non-carbon substances 20, a step B of rapidly cooling a gas generated by heating the precursor in the inert atmosphere in the part formed by non-carbon substances 20, wherein at least one of the silicon source and the carbon source is liquid form.

## Description

### TECHNICAL FIELD

The present invention relates to a method and apparatus for producing silicon fine particles.

### BACKGROUND ART

Recently, with the advance in nanotechnology, a raw-material powder is sought to have a smaller particle size. The target of research and development is shifting from submicron particles to nanoparticles.

Particularly, nanoparticles of 20 nm or smaller are known to demonstrate a peculiar electromagnetic effect along with change in an electronic state and also to have excellent properties, which a bulk material does not have, owing to an increased percentage of surface atoms and so on. For this reason, for example, silicon fine particles are expected to be used for a light-emitting element and other applications.

Further, in the field of medicine, for example, the silicone fine particles are highly expected to be used for a light-emitting material which can be injected into a living body, because the silicone fine particles have the advantage that these are non-toxic, inexpensive and various, in addition to the property of emitting light of visible range.

As a method for producing the above-mentioned silicon fine particles, a production method described in Patent Document 1 is known.

In particular, Patent Document 1 discloses a method for a composite powder containing the silicon fine particles, which has a step of baking a mixture containing a silicon source and a carbon source in an inert atmosphere to generate a gas, a step of drawing the generated gas from the inert atmosphere, and a step of rapidly cooling the generated gas.

### PRIOR ART DOCUMENT

### PATENT DOCUMENT

Patent Document 1: Japanese Patent Application Publication No. 2010-195637

### SUMMARY OF THE INVENTION

According to the method for producing silicon fine particles, the following points are described in the above-mentioned Patent Document 1.
- Firstly, silicon monoxide (SiO) gas is generated as an intermediate product in a chemical reaction represented by the following formula (1).
- When continuously heating the generated silicon monoxide gas at a temperature of 1600°C or higher, silicon carbide powder is generated by a chemical reaction represented by the following formula (2).
- On the other hand, when rapidly cooling the generated silicon monoxide gas at a temperature below 1600°C, a mixture containing silicon (Si) fine particles can be obtained by a chemical reaction represented by the following formula (3).

SiO₂ + C → SiO + CO (1)

SiO + 2C → SiC + CO (2)

2SiO -> Si + SiO₂ (3)

However, the above-mentioned production method diverts a method for producing silicon carbide (SiC).

That is, in the above-mentioned production method, the silicon monoxide gas generated by the chemical reaction represented by the formula (1) is rapidly cooled after being drawn, and therefore, the silicon monoxide gas cannot be rapidly cooled at a temperature below 1600°C, the chemical reaction represented by the formula (2) is made progress in parallel. As a result, there is a problem that it is difficult to further improve yield rate of silicon.

Accordingly, the present invention has been made in view of the mentioned problem. An object of the present invention is to provide a high-yield rate method and apparatus for producing silicon fine particles.

The first feature of the present invention is a method for producing silicon fine particles which comprises a step A of heating a precursor obtained by drying a mixture containing a silicon source and a carbon source in an inert atmosphere in a part formed by non-carbon substances by using a heating means in order to generate gas, and a step B of rapidly cooling the gas generated by heating the precursor in the inert atmosphere in the part formed by non-carbon substances, wherein at least one of the silicon source and the carbon source is liquid form.

### BRIEF DESCRIPTION OF DRAWINGS

[Fig. 1] Fig. 1 is a flowchart showing a method for producing silicon fine particles according to the first embodiment of the present invention.
[Fig. 2] Fig. 2 is an example of steps S103 and S104 which is performed in the method for producing silicon fine particles according to the first embodiment of the present invention.
[Fig. 3] Fig. 3 is an example of steps S103 and S104 which is performed in the method for producing silicon fine particles according to the first embodiment of the present invention.
[Fig. 4] Fig. 4 is an example of steps S103 and S104 which is performed in the method for producing silicon fine particles according to the first embodiment of the present invention.
[Fig. 5] Fig. 5 is an example of an apparatus for producing silicon fine particles according to the first embodiment of the present invention.
[Fig. 6] Fig 6 is a chart showing a property of silicon fine particles produced by the method for producing the silicon fine particles according to the first embodiment of the present invention.

### Description of Embodiments

### (First Embodiment of the Present Invention)

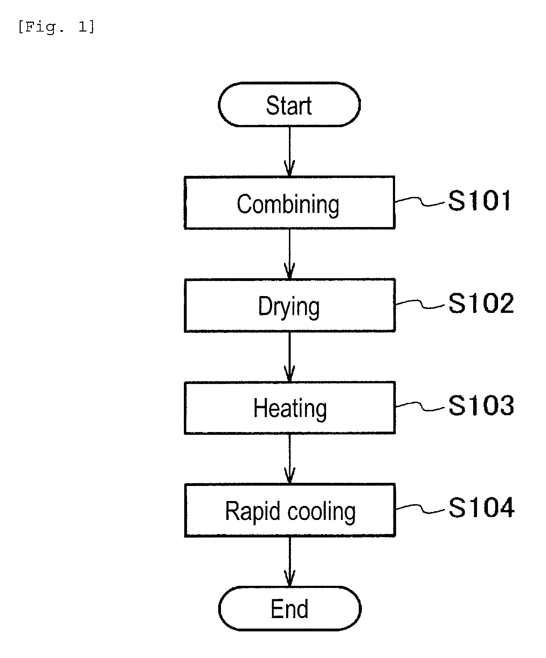

The method and apparatus for producing silicon fine particles according to the first embodiment of the present invention will be described with reference to Figs 1 to 4.

As shown in Fig. 1, in step S101, by combining a silicon source containing at least one kind of silicon compound, and a carbon source containing at least one kind of organic compound which generates a carbon by heating to generate a mixture of the silicon source and the carbon source.

For example, the silicon source and the carbon source are combined by using an acid aqueous solution as a curing agent. As the silicon source, a liquid silicon source and a solid silicon source can be used together, but at least one liquid silicon source must be used.

For example, as the liquid silicon source, alkoxysilanes (mono-, di-, tri-, tetra-) and polymers of tetraalkoxysilanes can be used.

As the liquid silicon source, among the alkoxysilanes, tetraalkoxysilanes is preferably used, and in particular, methoxysilane, ethoxysilane, propoxysilane, butoxysilane, and the like can be preferably used. From the view of handling, ethoxysilane is preferably used as the liquid silicon source.

Further, among the polypmers of tetraalkoxysilnaes, low molecular weight polymers (oligomers) having a degree of polymerization of approximately 2 to 15 and silicic acid polymers having a higher degree of polymerization can be used as the liquid silicon source.

Silicon oxides can be used as the solid silicon source usable together with these liquid silicon sources.

In the present embodiment, the silicon oxide include, besides SiO, silica gels (colloidal ultrafine silica-containing solution containing an OH group and an alkoxy group therein), silicon dioxide (silica gel, fine silica, quartz powder), and the like.

These silicon sources can be used singly, or in combination of two or more kinds. Among these silicon sources, tetraethoxysilane oligomer, mixtures of tetraethoxysilane oligomer and fine powder silica, and the like are preferable from the viewpoint of homogeneity and handling.

A substance used as the carbon source is preferably an organic compound containing oxygen therein, and which keeps carbon when it is heated.

In particular, phenolic resins, furan resins, epoxy resins, phenoxy resins, and sugars including monosaccharides such as glucose, oligosaccharides such as sucrose, and polysaccharides such as cellulose and starch are exemplified.

In order to combine these carbon sources with the silicon sources homogenously, carbon sources, which are liquid form at a normal temperature, dissolvable into a solvent, and soften and liquefy by heating as with a thermoplastic or thermal melting substance, are mainly used.

Among these, resol-type phenolic resins or novolac-type phenolic resins are preferably used. In particular, resol-type phenolic resins are preferably used.

A curing agent can be appropriately selected depending on the carbon sources. For example, when the carbon source is the phenolic resins or furan resins, a weak acid aqueous solution such as toluenesulfonic acid aqueous solution, toluenecarboxylic acid aqueous solution, acetic acid aqueous solution, oxalic acid aqueous solution, sulfuric acid aqueous solution and the like can be used as the curing agent. Among these, toluenesulfonic acid, maleic acid, hydrochloric acid and the like are preferably used as the curing agent.

Note that at least one of the silicon sources and the carbon sources which are used for generating the above-mentioned mixture must be in liquid form.

In step S102, a precursor in solid form is generated by drying the mixture obtained in step S101 at a temperature of 100 to 300°C.

As mentioned above, because at least one of the silicon sources and the carbon sources contained in the mixture which is used for generating the precursor is in liquid form, SiO₂ and C are uniformly dispersed in inner portion of the precursor on the molecular level.

Because various organic components are contained in the precursor, the precursor can be carbonized at 500 to 1300°C in a non-oxidizing atmosphere.

For example, the mixture ratio between carbon and silicon in the precursor (hereinafter abbreviated to C/Si ratio) is preferably 0.5 to 3.0, more preferably 0.75 to 1.5.

In step S103, the carbonized precursor is heated in an inert atmosphere in a part formed by non-carbon substances.

The non-carbon substances can be a substance containing carbon unless the carbon is not exposed on the surface of the non-carbon substances. For example, substance having a strong carbon bond such as SiC, and substance which sublimates at very high temperature, and thereby C contained in the substance does not sublimate, can be used as the non-carbon substances.

The inert atmosphere represents a state filled with an inert gas such as Ar, N₂ and H₂. Note that an active gas such as O₂ can be contained in the inert atmosphere as far as in a slight amount that the active gas does not affect the property of the inert atmosphere.

In particular, in step S103, the carbonized precursor can be heated by using heating plasma, a resistance heating apparatus, a laser heating apparatus, arc plasma and the like.

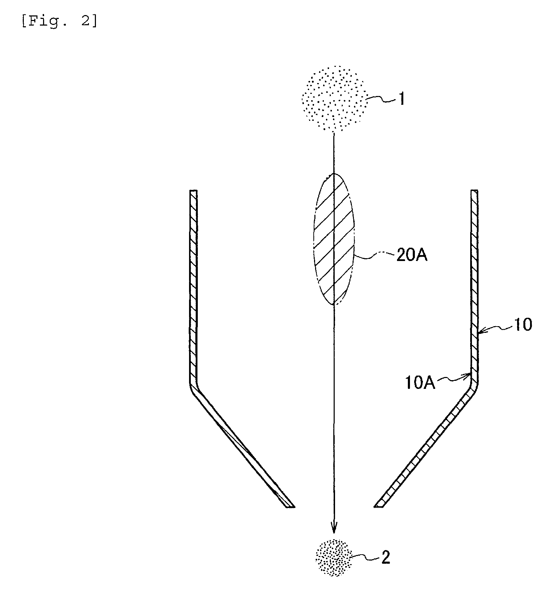

For example, as shown in Fig. 2, after finely pulverizing the precursor, a gas containing the precursor can be sprayed to a heating part 20A generated by heated plasma in a chamber 10 by using a powder providing apparatus such as a table feeder and screw feeder.

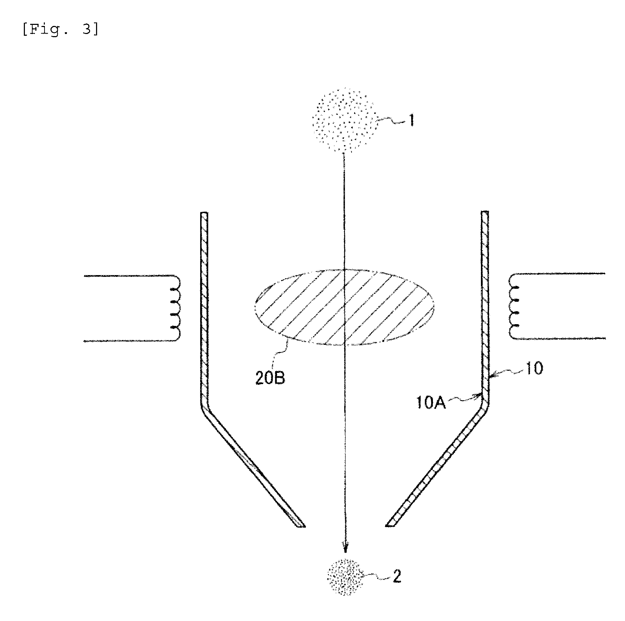

Alternatively, as shown in Fig. 3, after finely pulverizing the precursor, the gas containing the precursor can be sprayed to a heating part 20B generated by the resistance heating apparatus in the chamber 10 by using the powder providing apparatus such as the table feeder and screw feeder.

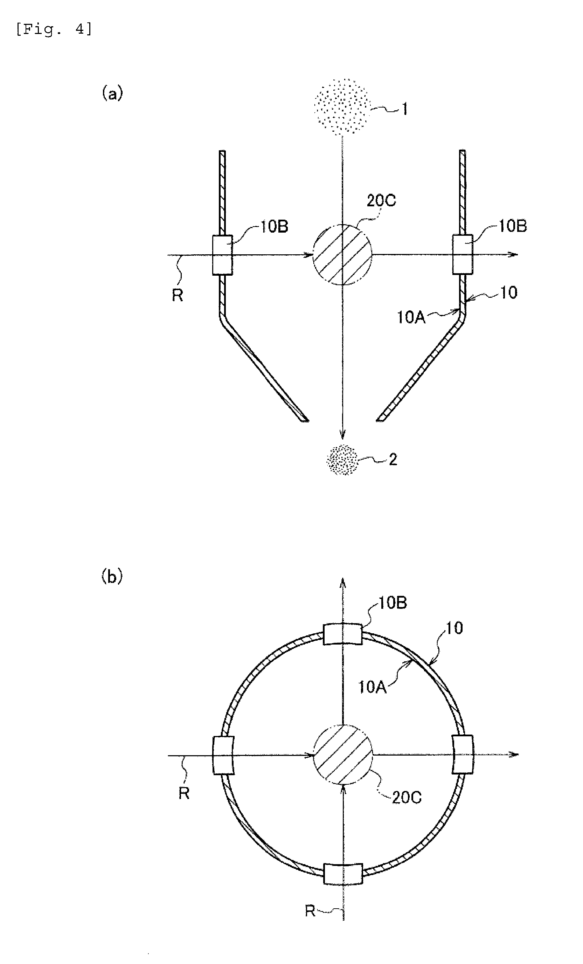

Alternatively, as shown in Fig. 4 (a) and Fig. 4(b), after finely pulverizing the precursor, the gas containing the precursor can be sprayed to a heating part 20C generated by the laser heating apparatus in the chamber 10 by using the powder providing apparatus such as the table feeder and screw feeder.

As shown in Fig. 4 (a) and Fig. 4 (b), the heating part 20C is a part where CO₂ lasers or YAG lasers entering into inside of the chamber 10 from two directions through glass windows 10B are crossed.

The inside of the chamber 10 is in a state of inert atmosphere due to a gas for plasma. Further, the chamber 10 has an inside wall consisting of non-carbon substances (for example, a stainless inside wall).

In the above case, the heating plasma, resistance heating apparatus or laser heating apparatus works to be a heating means, and thereby, the precursor can be heated in the heating part 20A to 20C at 1300°C or higher, more preferably at 1500°C or higher. As a result, the silicon monoxide (SiO) gas is generated by the chemical reaction represented by the following (Formula 1).

SiO₂ + C -> SiO + CO (Formula 1)

In step S104, the gas generated by heating the precursor is rapidly cooled in the inert atmosphere in the part formed by non-carbon substances.

In particular, as shown in Fig. 2 to Fig. 4, for example, the silicon monoxide gas generated in the heating part 20A to 20C is released outside the heating part 20A to 20C in the chamber 10 by airflow.

In this case, a temperature of the outside of the heating part 20A to 20C is below 1300°C, and therefore, the silicon monoxide gas can be rapidly cooled to below 1300°C. Further, the inside of the chamber 10 is maintained at a room temperature, and therefore, the silicon monoxide gas is then cooled to a room temperature rapidly. As a result, a composite powder containing silicon (Si) fine particles is generated by the chemical reaction represented by the following (Formula 2).

2SiO -> Si + SiO₂ (Formula 2)

The composite powder generated by being released from the chamber 10 is collected into a cyclone dust collector, a dust collector or the like.

The composite powder collected into the dust collector can be heated in the inert atmosphere at the temperature of 1000 to 1100°C. And an etching can be performed according to the following process. In particular, the heat-treated composite powder is immersed in an etching solution containing hydrofluoric acid and an oxidant. For example, nitric acid (HNO₃) and hydrogen peroxide (H₂O₂) can be used as the oxidant. A slightly polar solvent (for example, 2-propanol) may be mixed with the etching solution to facilitate recovery of the silicon fine particles.

The etching time is adjusted so that a desired emission peak can be obtained. The longer the etching time is, the more likely the emission peak shifts to a shorter wavelength side.

The etching is proceeded until a desired emission peak is obtained. Then, the silicon fine particles are extracted from the etching solution. The extracted silicon fine particles are dried as appropriate, and thereby light-emitting silicon fine particles having a desired emission peak can be obtained.

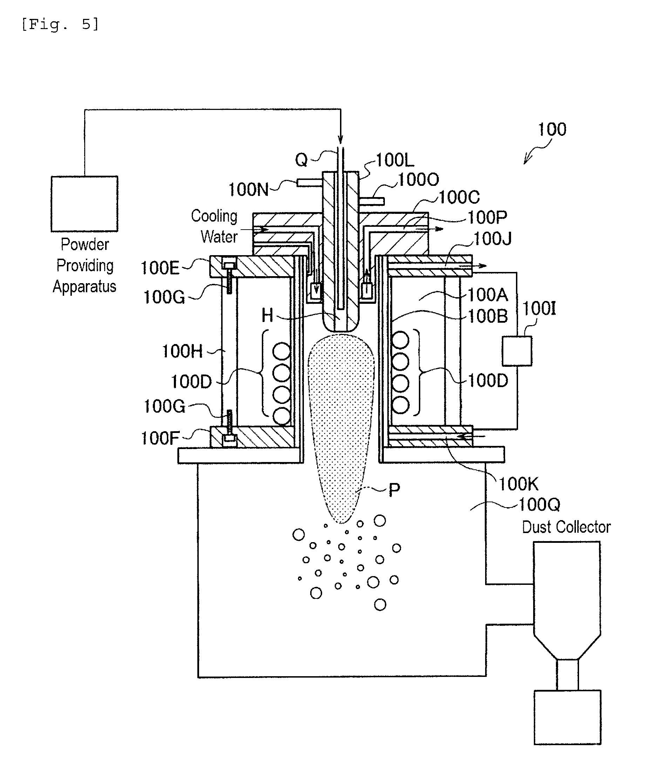

Hereinafter, an example of an apparatus for producing silicon fine particles of a first embodiment of the present invention will be described with reference to Fig. 5.

A high-frequency induction heating plasma apparatus 100 as shown in Fig. 5 can be used to be an apparatus for producing silicon fine particles of the present embodiment. Any apparatus such as a laser baking apparatus and a resistance heating baking apparatus can be used to be an apparatus for producing silicon fine particles of the present embodiment, as far as it can perform locally heating, other than the high-frequency induction heating plasma apparatus 100 shown in Fig. 5.

As shown in Fig. 5, the high-frequency induction heating plasma apparatus 100 includes a torch 100A for generating plasma, and the torch 100A consists of a cylindrical member 100B, a gas ring 100C mounted on upper side of the cylindrical member 100B, an induction coil 100D placed outside the cylindrical member 100B, and the like.

The cylindrical member 100B has a double pipe structure consisting of an inner pipe and an outer pipe, and the inner pipe consists of non-carbon substances.

The cylindrical member 100B is mounted between a upper flange 100E and a lower flange 100F, and both the upper flange 100E and the lower flange 100F are fixed to a supporting bar 100H with a clincher 100G.

A high-voltage generator including an ignition coil 100I and the like connects the upper flange 100E and the lower flange 100F.

An outflow path of cooling water 100J is set on the upper flange 100E, and an inflow path of the cooling water 100K is set on the lower flange 100F.

The cooling water is provided inside of the double pipe structure of the cylindrical member 100B through the inflow path 100K, and is discharged from the inside of the double pipe structure of the cylindrical member 100B through the outflow path 100J.

A probe 100L is placed at a central part of the gas ring 100C. A probe central hole H is formed at a central part of the probe 100L along longitudinal direction of the probe 100L, and a pipe Q is inserted into the probe central hole H.

A gas (for example, argon gas) containing the above precursor is provided inside of the cylindrical member 100B from a powder providing apparatus through the pipe Q.

A plasma gas (for example, argon gas) is provided inside of the cylindrical member 100B from a gas source (not shown in the figure) through a providing path 100M in the gas ring 100C.

Further, a flow path of the cooling water (not shown in the figure) is configured in the probe 100L, and the cooling water is provided through an inlet 100N, and is discharged through an outlet 100O.

Further, another flow path of the cooling water 100P is configured also in the gas ring 100C, and the cooling water is provided in the flow path 100P.

The induction coil 100D is configured so that a high-frequency power is provided from a high-frequency power source (not shown in the figure).

Further, a chamber 100Q is placed under the torch 100A.

Hereinafter, behavior of the high-frequency induction heating plasma apparatus 100 will be briefly described.

In the first place, the plasma gas is provided inside of the cylindrical member 100B from the plasma gas source through a providing path 100M in the gas ring 100C. In addition, a high-frequency power is provided to the induction coil 100D from the high-frequency power source.

In the second place, when a high voltage is applied between the upper flange 100E and the lower flange 100F from the high-voltage generating apparatus 100I in the above-mentioned state, corona discharge is generated between the upper flange 100E and the lower flange 100F, which triggers generation of a heating plasma P in the torch 100A (ignition).

In the fourth place, the gas containing the above-mentioned precursor is provided to the heating part with heating plasma P through the pipe Q in the probe central hole H placed in the center of the gas ring 100C.

In the fifth place, the precursor is vaporized and dissolved in the heating part with heating plasma P of approximately 10000°C, and thereby, the silicon monoxide (SiO) gas is generated by the chemical reaction represented by the above-mentioned (Formula 1).

In the sixth place, the silicon monoxide gas generated in the heating part with heating plasma P is released from the heating part with heating plasma P to the inside of the chamber 100Q by airflow.

As a result of rapid cooling of the silicon monoxide in the chamber 100Q, a composite powder containing the silicon (Si) fine particles is generated by the chemical reaction represented by the above-mentioned (Formula 2).

In the sixth place, the generated composite powder is collected into a dust collector connected to the chamber 100Q.

According to the method for producing silicon fine particles of the first embodiment of the present invention, the silicon monoxide gas, which is generated by quickly heating the precursor in the inert atmosphere in the part formed by non-carbon substances by using the heating means such as heating plasma, a resistance heating apparatus, a laser heating apparatus and arc plasma, is released outside the heating part 20A to 20C to rapidly cool the gas below 1300°C (then, room temperature), and therefore, the chemical reaction represented by the following (Formula 3) occurred in a production method disclosed in the above-mentioned Patent Document 1 can be maximally avoided, and thereby yield rate of the silicon fine particles can be improved.

SiO + 2C -> SiC + CO (Formula 3)

Further, according to the method for producing silicon fine particles of the first embodiment of the present invention, the precursor in which SiO₂ and C are uniformly dispersed on the molecular level is used, and therefore, the chemical reaction represented by the above (Formula 1) adequately occurs during the precursor is released from the heating part 20A to 20C, and thereby yield rate of the silicon fine particles can be improved.

### (Comparative Evaluation)

To further clarify an effect of the present invention, the production method of the present invention was compared with the production method disclosed in the above Patent Document 1 (Conventional Example) in terms of yield amount and yield rate of produced silicon fine particles. A comparative result is shown in Table 1.

**[Table 1]**

| | Raw materials | Products | Si content | Yield rate |
|---|---|---|---|---|
| Conventional Example | 50g | 2g | 0.1 g (5%) | 0.2% |
| Example | 100g | 40g | 16g (40%) | 16% |

As shown in Table 1, in Conventional Example, when a total amount of silicon source and carbon source (raw materials) was 50g, a weight of the composite powder (products) as mentioned above was 2g, and a weight of the silicon fine particles contained in the composite powder was 0.1g. That is, yield rate of the silicon fine particles in Conventional Example was 0.2%.

On the other hand, in the production method of the present invention, when total amount of silicon source and carbon source (raw materials) was 100g, a weight of the composite powder (products) as mentioned above was 40g, and a weight of the silicon fine particles contained in the composite powder was 16g. That is, yield rate of the silicon fine particles in Example was 16%.

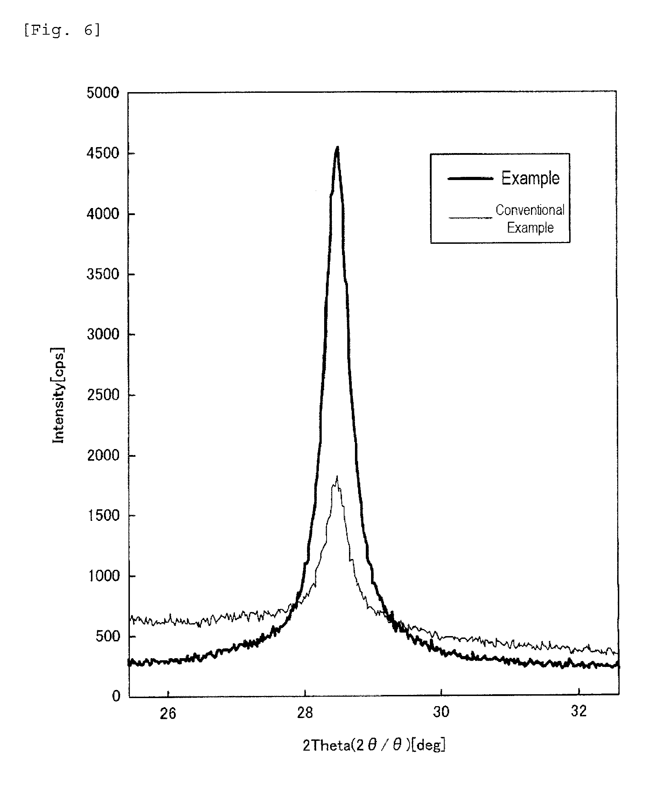

As evidenced by chart of Fig. 6, a ratio of the silicon fine particles contained in the composite powder generated by the production method of the present invention is larger than a ratio of the silicon fine particles contained in the composite powder generated by the production method of Conventional Example.

As mentioned above, the present invention is explained in detail by exemplifying the above embodiment. However, it is clearly understood by one skilled in the art that the present invention is not limited to the embodiment described in the present specification. The present invention can be implemented as a corrected and modified mode without departing from the gist and the scope of the present invention defined by the claims. Therefore, the description of the specification is intended for explaining the example only and does not impose any limited meaning to the present invention.

All the contents of Japanese Patent Application No. 2011-279733 (filed on December 21, 2011) are incorporated therein by reference.

### INDUSTRIAL APPLICABILITY

As has been described above, the method and apparatus for producing silicon fine particles of the present invention is useful because the method and apparatus can improve yield rate of the silicon fine particles.

## Claims

1. A method for producing silicon fine particles, comprising:
a step A of heating a precursor obtained by drying a mixture containing a silicon source and a carbon source in an inert atmosphere in a part formed by non-carbon substances by using a heating means,
a step B of rapidly cooling a gas generated by heating the precursor in the inert atmosphere in the part formed by non-carbon substances,
wherein at least one of the silicon source and the carbon source is liquid form.

2. The method for producing silicon fine particles according to claim 1, wherein, in the step A, the precursor is heated in a chamber having an inside wall consisting of non-carbon substances by using heating plasma, a resistance heating apparatus, a laser heating apparatus or arc plasma as the heating means.

3. An apparatus for producing silicon fine particles, comprising:
a heating means configured to heat a precursor obtained by drying a mixture containing a silicon source and a carbon source in an inert atmosphere in a part formed by non-carbon substances,
a rapid cooling means configured to rapidly cool a gas generated by heating the precursor in the inert atmosphere in the part formed by non-carbon substances,
wherein at least one of the silicon source and the carbon source is liquid form.

4. The apparatus for producing silicon fine particles according to claim 3, wherein the heating means is configured to heat the precursor in a chamber having an inside wall consisting of non-carbon substances by using heating plasma, a resistance heating apparatus, a laser heating apparatus or arc plasma.

5. The apparatus for producing silicon fine particles according to claim 4, wherein the rapid cooling means is configured to rapidly cool the gas by releasing the gas outside the heating part where the precursor is heated by the heating means.
